# EUROPEAN PATENT SPECIFICATION

(11) **EP 3 842 697 B1**
(45) Date of publication and mention of the grant of the patent: **08.05.2024**
(21) Application number: 18915787.8
(22) Date of filing: 07.11.2018
(51) Int. Cl.: F24F 1/005, F24F 13/068, F24D 3/14, F24F 5/00, F24F 13/06

(54) **NEW-TYPE AIR CONDITIONING TERMINAL SYSTEM FOR HIGH AND LARGE SPACES**
NEUARTIGES KLIMAANLAGENSYSTEM FÜR HOHE UND GROSSE RÄUME
SYSTÈME DE TERMINAL DE CLIMATISATION DE TYPE NOUVEAU POUR ESPACES ÉLEVÉS ET GRANDS

(30) Priority: 23.08.2018 CN 201810968086
(43) Date of publication of application: 30.06.2021
(73) Proprietor: China Northwest Architecture Design and Research Institute Co., Ltd, Xi'an, Shaanxi 710018 (CN)
(72) Inventor: ZHOU, Min, Xi'an, Shaanxi 710018 (CN); HOU, Zhankui, Xi'an, Shaanxi 710018 (CN)
(74) Representative: Herrero & Asociados, S.L.
(86) International application number: PCT/CN2018/114442
(87) International publication number: WO 2020/037836

(56) References cited:
- CN-A- 101 603 714
- CN-A- 107 575 968
- CN-U- 202 392 913
- CN-U- 206 755 417
- KR-A- 20030 026 082
- KR-A- 20050 017 518
- US-A- 5 943 874
- US-A1- 2014 149 270

## Description

### FIELD OF THE INVENTION

The invention relates to a heating ventilation air conditioning technical field, and more particularly to an air conditioning terminal system for a large space.

### BACKGROUND

Buildings with large space (for example, airport terminals, station waiting halls, convention centers and stadiums) have some common architectural features and air conditioning system features:
(1) high, large and transparent buildings; large proportion of transparent envelope structure; large flow of people and high density of people; and long running time throughout the year;
(2) strong solar radiation on the floor surface; high wall temperature of the envelope structure; demands of air-conditioning's temperature, humidity and wind speed are only in the space near a certain height from the ground;

At present, the air conditioning terminal system used in the building with large space is an all-air mixed ventilation air conditioning system, which delivers air by injecting from nozzles or by top twist outlets. Height of the air outlets is very high (3.5-7.0m or higher from the ground), and wind speed is very high (3.0-7.5m/s or more). This type of system leads to problems such as high load, high initial investment, high energy consumption and high cost, poor indoor thermal comfort, and poor indoor air quality in air conditioning systems of buildings with large space. Moreover, the document D1 of Chinese patent publication No. CN206755417U discloses that a temperature and humidity independent control air conditioning system suitable for big space so as to realize independent regulations of indoor temperature, humidity and fresh air demand. Specifically, it includes a radiant floor, an indoor return air dehumidification unit, a distributed air supply end, a fresh air inlet and an exhausting window. The fresh air inlet is the original personnel entrance for introducing fresh air; the distributed air supply end includes: a drying air chamber and an indoor return air treatment chamber that are separated from each other, and an air-water heat exchanger installed in the indoor return air treatment chamber. The distributed air supply end is configured to output the return air after dehumidification by the indoor return air dehumidification unit and the indoor return air after cooled or heated by the air-water heat exchanger of the distributed air supply end.
In addition, the document D2 of Korean patent application publication No. KR20050017518A discloses that an indoor unit of an air conditioner includes intake ports arranged two sides thereof, and the intake ports are not tightly adhered to walls or furniture, etc., and effective three-dimensional cooling/heating is possible.

In view of this, it is urgent to provide an air conditioning terminal system with small initial investment, low operating energy consumption, excellent thermal comfort and air quality.

### SUMMARY

The object of the present invention is to provide a new air conditioning terminal system for a large space, which adjusts and controls the indoor temperature and humidity environment by combining radiant coils embedded in the ground and air supply devices arranged on the ground.

The technical solution for achieving the object of the present invention is as follows.

An air conditioning terminal system for a large space is provided, including a first air conditioning device, a second air conditioning device, and an air conditioning terminal device. The air conditioning terminal device includes a radiant coil, air supply devices for conveying cold air or hot air into the large space.

The radiant coil is buried inside ground of the large space, and the first air conditioning device is in communication with the radiant coil. A fluid medium output from the first air-conditioning device is circulated in the radiant coil, and energy of the low-temperature fluid medium is first transmitted to the ground, and then radiated through the ground to the large space, thereby adjusting temperature of the large space.

The air supply devices are installed at a bottom of the large space, and are in communication with the second air conditioning device.

The air conditioning terminal device further includes a liquid desiccant air conditioning unit for treating fresh air outside the large space and delivering the fresh air into the large space, and a plurality of dry fan-coils; the air supply devices are further in communication with the liquid desiccant air conditioning unit, the air supply devices output mixed air including the fresh air output from the liquid desiccant air conditioning unit and cold air or hot air output from the second air conditioning device to the bottom of the large space.

There are a plurality of dry fan-coils, the plurality of dry fan-coils are fixed on the ground, and disposed near the side wall of the large space.

As a further improvement of the present invention, the second air conditioning device, the liquid desiccant air conditioning unit, and the air supply device are connected through a duct network, and the fresh air output from the liquid desiccant air conditioning unit and cold air or hot air output from the second air conditioning device are collected in the duct network, and are delivered to the air supply device through the duct network.

As a further improvement of the present invention, the air supply devices are installed at the bottom of the large space, and the second air conditioning device and the liquid desiccant air conditioning unit are respectively in communication with each of the air supply devices.

As a further improvement of the present invention, an air inlet of the second air conditioner is provided with a return air duct and a new air duct, the return air duct is provided with a return air valve, and the fresh air duct is provided with a fresh air valve. The return air valve and the fresh air valve are opened in an alternative way to achieve the internal return air in the large space or the fresh air outside of the large space to be transferred to the second air conditioning device in an optional way.

As a further improvement of the present invention, top of the return air duct is provided with a return air inlet which is 2.5-4.0 m from the ground.

As a further improvement of the present invention, the air supply devices are disposed on the floor in the large space.

As a further improvement of the present invention, a plurality of radiant coils are provided, and the plurality of radiant coils are buried in parallel, and each of the radiant coils is distributed in a fold shape.

As a further improvement of the present invention, a first branch duct is disposed at an air outlet of the liquid-desiccant air conditioning unit, a second branch duct is disposed at an air outlet of the second air conditioning device, and a main air duct is disposed at an air inlet of the air supply device. The first branch duct and the second branch duct are respectively connected with the main air duct, so that the fresh air in the first branch duct and the cold air or hot air in the second branch duct are collected in the main air duct.

As a further improvement of the present invention, the second air conditioning device is a dry coil air conditioning unit. The dry coil air conditioning unit includes a dry coil, and the dry coil is disposed in parallel with the radiant coil.

Compared with the prior art, the beneficial effects of the present invention are as follows.
1. Through an organic combination of the radiant coil and the lower air supply mode, the present invention not only achieves a good stratification effect and partial space control, but also achieves effective control of the heat and humidity environment of the control area (near-ground personnel active area); The invention minimizes the invalid loss of the air conditioning cool (heat) supply amount in the upper of the control area, and fundamentally greatly reduces the air conditioning load.
2. Due to a drastic reduction of air conditioning system load, the capacity and size of refrigeration device, conveying device, terminal device, auxiliary device, ducts, and accessories in the air conditioning system have been greatly reduced, and the initial investment in the air-conditioning systems has been greatly reduced.
3. The new air conditioning terminal system of the present invention has lower operating energy consumption and lower cost.
4. The invention adopts the lower air supply mode by mixing fresh air with cold air or hot air, and only carries out heat and humidity treatment in the control area (Near-ground personnel activity area), so the air volume of the air conditioning system is greatly reduced, and the operating energy consumption and cost of the air circulation power device are greatly reduced.
5. A large-area radiant coil is used in the present invention and the cold and heat is transferred using water as medium in the coil. Since the specific heat capacity of water is large, the energy consumption for transportation is only about 20% to 30% of air-mediated air conditioning system.
6. The invention uses the liquid desiccant air conditioning unit to dehumidify the fresh air, replaces the traditional condensing and dehumidifying mode, and bears the entire latent heat load in the room. Other devices only need to handle the indoor sensible heat load (about 50% to 70% of the total load). Therefore, it is possible to directly use a free natural cold source. Even with electric refrigeration, the efficiency of the refrigerator will increase by more than 30%, and the efficiency of the refrigerator further reduces the operating energy consumption and cost of the system.

### BRIEF DESCRIPTION OF THE DRAWINGS

FIG.1 is a schematic diagram of a new air conditioning terminal system.
FIG. 2 is a schematic diagram of a layer structure of a radiant floor containing radiant coils.

In the figures, 1--radiant coil; 11--ground radiant heating pipe; 12--fixing clamp; 13-basement layer; 14--insulating layer; 15--concrete filling layer; 16--floor; 2--air supply device; 3--liquid desiccant air conditioning unit; 4--dry coil air conditioning unit; 5--dry fan-coil; 200--fresh air; 300--air-conditioning plant room; 400--large space; 500--return air.

### DETAILED DESCRIPTION OF PREFERRED EMBODIMENTS

In the description of the embodiments, it is to be understood that the term "center", " longitudinal", " transverse ", "upper ", " lower ", " front ", " back ", "left", "right", "vertical", " horizontal", "top", "bottom", "inside" and "outside" indicates a location or position relations based on the location or position shown in the appended drawings. It is intended only to facilitate the description of the disclosure and to simplify the description, and not to indicate or imply that the device or element referred to must have a specific orientation, or be constructed and operated in a specific orientation, and therefore cannot be understood as a restriction on the disclosure.

Moreover, the terms "first", "second", "third", etc. are used only for descriptive purposes and are not to be construed as indicating or implying a relative importance or implicitly indicating the number of technical features indicated. Thus, features defining "first", "second", etc. may include one or more of the features, either explicitly or implicitly. In the description of the disclosure, "A plurality of" means two or more, unless otherwise stated.

The terms "install", "link", and "connect" are to be understood broadly, and for example, may be a fixed connection, a detachable connection, or an integral connection; may be a mechanical connection or an electrical connection; may be direct connection, or indirect connection through an intermediate medium, or may be the internal connection of two components. The specific meaning of the above terms in the creation of the present disclosure can be understood by those skilled in the art depending on the circumstances.

**Embodiment 1, which is an embodiment not covered by the claimed invention and thus is an embodiment not falling under the scope of the appended claims is to be considered merely as an example suitable for understanding the invention.**

Due to architectural characteristics of the large-space building itself and demands for air conditioning systems in the large-space building, an all-air mixed ventilation air conditioning system that delivers air by injecting from nozzles or by top twist outlets is commonly used. However, due to the limitation of the indoor airflow and the actual conditions on the site, the height of the nozzles is mostly concentrated at 3.5 to 7.0 meters or higher from the ground, that is, the air conditioning system controls the indoor temperature and humidity below the nozzles. The height of the air conditioning control area is about 3.5 to 7.0 meters and the air conditioning system is heavily loaded. If it is subject to special conditions, the all-air mixed ventilation air conditioning system that delivers air from the top twist outlets will increase the load of the air-conditioning system by 30%-40%. According to statistics, the cold load of side supply air conditioning system in the large-space buildings is about 250W/m²-280W/m², and the cold load of the air conditioning system that delivers air from the top twist outlets is 300W/m²-380W/m².

In addition, due to the huge load of the air conditioning system, the capacity and size of refrigeration device, conveying device, terminal device, auxiliary device, ducts, and accessories in the air conditioning system have increased significantly, and the initial investment in the air conditioning system is very high.

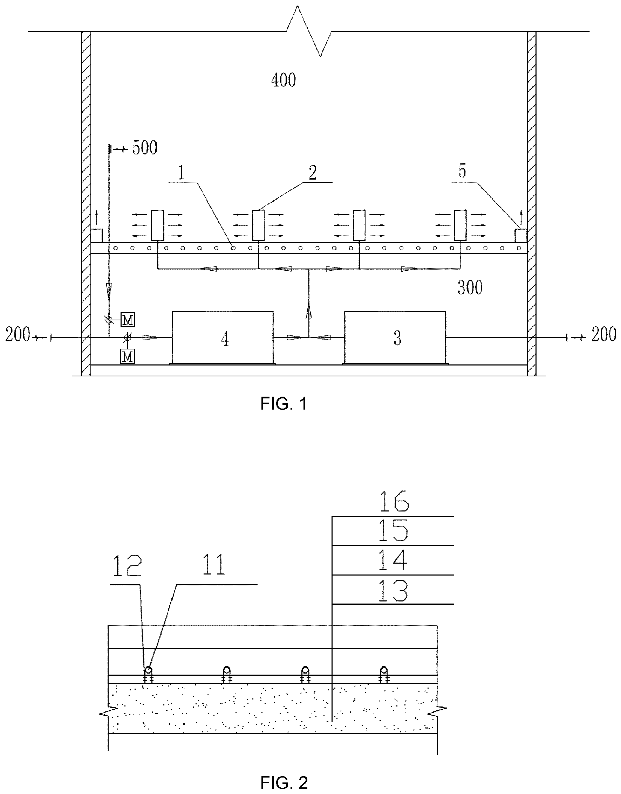

In order to solve the problems of large initial investment and high energy consumption of the existing air conditioning terminal system, please refer to FIG. 1, which is a schematic diagram of a new air conditioning terminal system. This embodiment discloses an air conditioning terminal system for a large space. The air conditioning terminal system comprises a first air conditioning device, a second air conditioning device, and an air conditioning terminal device. The air conditioning terminal device includes radiant coil 1, air supply devices 2, dry fan-coils 5, and an exhaust device installed on top of the large space. The radiant coil 1 is buried inside the ground of the large space, and the first air conditioning device is in communication with the radiant coil.

When used in the cooling season, a low-temperature fluid medium output from the first air-conditioning device is circulated in the radiant coil 1, and the energy of the low-temperature fluid medium is first transmitted to the ground, and then radiated through the ground to the large space, so that the temperature in the large space is lowered. The air supply devices 2 are installed at the bottom of the large space, and are used for diffusing a mixed cold air output from the second air conditioning device and the liquid desiccant air conditioning unit 3 to the bottom of the entire large space.

There are a plurality of dry fan-coils. The plurality of dry fan-coils are fixed on the ground, and are disposed near the side wall of the large space.

At present, most of the large spaces are surrounded by glass curtain walls, and the glass curtain walls have relatively poor insulation compared with conventional concrete walls. During the cooling season, outdoor heat will enter the large space through the glass curtain walls, causing temperature rise in the large space. Therefore, in this embodiment, a plurality of dry fan-coils are disposed in the vicinity of the glass curtain walls. The cold air processed by the dry fan-coils is blown to the glass curtain walls, so that the indoor temperature near the glass curtain walls is lowered, thereby achieving the purpose of auxiliary adjustment of the Internal temperature of the large space. During the heating season, the temperature of the air near the glass curtain walls is low, causing a temperature decrease in the large space. Therefore, in this embodiment, a plurality of dry fan-coils are disposed in the vicinity of the glass curtain walls. The hot air processed by the dry fan-coils is blown to the glass curtain walls, so that the indoor temperature near the glass curtain walls is raised, thereby achieving the purpose of auxiliary adjustment of the internal temperature of the large space. In actual use, it is preferred that the distance between the dry fan-coil 5 and the side walls of the large space (glass curtain walls) is 0.5-10 m. The distance of 0.5-10m can not only realize the cooling effect of dry fan-coil on the glass curtain walls, but also not affect the installation of the dry fan-coils. In addition, the distance of 0.5-10m between the dry fan-coils and the glass curtain walls does not affect the normal use of the large space.

When used in the heating season, a high-temperature fluid medium output from the first air-conditioning device are circulated in the radiant coil 1, and the energy of the high-temperature fluid medium is first transmitted to the ground, and then radiated through the ground to the large space, so that the temperature in the large space rises. The air supply devices 2 are installed at the bottom of the large space, and are used for diffusing a mixed hot air output from the second air conditioning device and the liquid desiccant air conditioning unit 3 to the bottom of the entire large space, so that the cold air inside the large space rises under the action of the hot air and discharge from the exhaust device.

In the present embodiment, the air supply devices 2 are directly installed on the ground. In actual use, the spacing between two adjacent air supply devices 2 needs to be checked according to air supply temperature, air supply speed, and air supply amount. The spacing between the two adjacent air supply devices 2 is usually 5-6 meters. When used in the cooling season, the fluid medium of the embodiment is high-temperature cold water of about 14 °C, and the medium (high-temperature cold water) in the radiant coils 1 may be all cold sources capable of generating high-temperature cold water (about 14 °C), such as high-temperature refrigerator or natural cold source, etc. In general, the medium in the radiant coil 1 is return water from refrigerating stations or upstream low-temperature users (primary users). The medium in the radiant coil 1 is generally about 14 °C, and the temperature of the medium only needs to make the temperature of the floor surface higher than dew point temperature of the indoor air, so as to ensure that the surface of the floor does not condense.

When used in the heating season, the fluid medium of the present embodiment is low-temperature hot water of about 45 °C, and the medium (low-temperature hot water) of the radiant coils 1 may be all heat sources capable of generating low-temperature hot water (about 45 °C), such as vacuum boilers, solar hot water, geothermal water, etc. In general, the medium in the radiant coil 1 is return water from the heating stations or upstream high-temperature users (primary users).

In this embodiment, the air supply devices 2 are disposed at the bottom of the large space, and the exhaust device is disposed at the top of the large space. The supply air volume, air supply wind speed, and air supply direction are easily to adjust and control, and composition of the airflow is uniform. The structure of the air conditioning terminal system is relatively simple, easy to install, debug and overhaul.

In actual use, it is preferred that the first air conditioning device is a high-temperature refrigerator or a natural cold source or the like.

In actual use, it is preferred that the second air conditioning device is a dry coil air conditioning unit 4. The dry coil air conditioning unit 4 is a specially developed device for adapting an air-conditioning system that can independent control temperature and humidity, and has advantages of large air volume, low noise, simple structure, flexible installation position and no wet surface. The dry coil air conditioning unit 4 of the present embodiment is similar to the conventional air conditioning unit, except that the supply temperature of cold water and the structural form of the heat exchanger are different. The dry coil air conditioning unit 4 is a whole, and is integrally installed in an air-conditioning plant room 300, and is connected to the indoor air supply device 2 through air ducts. Air to be cooled or heated required by the dry coil air conditioning unit 4 is from indoor return air or outdoor fresh air. Preferably, the air inlet of the dry coil air conditioning unit 4 is provided with a return air duct and a fresh air duct. A return air valve is set on the return air duct, and a fresh air valve is set on the fresh air duct. The return air valve and the fresh air valve are opened in an optional way to realize the return air in the large space or the fresh air outside of the large space to be transferred to dry coil air-conditioning unit 4 in an optional way. During the cooling season and the heating season, only the indoor return air enters the dry coil air conditioning unit 4, and the fresh air valve is closed. During the transition season, the fresh air valve is turned on, the return air valve is closed, and a fresh air operation mode is adopted.

In this embodiment, after the return air valve is opened and the fresh air valve is closed, most of air above a control area enters the dry coil air conditioning unit from the return air duct, and becomes cold air or hot air after being processed by the dry coil air conditioning unit, and output. At this time, exhaust air discharged by the exhaust device only accounts for a small part.

It should be noted that the outdoor fresh air and indoor return air are not mixed in the dry coil air conditioning unit 4, and only the indoor return air enters the dry coil air conditioning unit 4 during the cooling season and the heating season. At this time, the fresh air valve of the fresh air duct on the coil air conditioning unit 4 is closed, and the return air valve on the return air duct is opened. During the transition season, the fresh air valve of the fresh air duct on the dry coil air conditioning unit 4 is turned on, the return air valve on the return air duct is closed, and a fresh air operation mode is adopted.

The return air inlets of this embodiment are installed at a high place in the room, about 3 meters from the ground. The size and quantity of the return air inlets shall be calculated according to the rated return air volume of one dry coil air conditioning unit. According to the sensible heat load and the air supply temperature difference assumed by the responsible area of one dry coil air conditioning unit, the air supply volume of the unit can be obtained. The return air volume is equal to the air supply volume of the unit, and the size and quantity of the air return inlets can be calculated according to a method of controlling wind speed. According to indoor dehumidification and fresh air volume requirements of personnel, the fresh air volume of the liquid desiccant air conditioning unit can be calculated. The air supply volume of the dry coil air conditioning unit + the fresh air volume of liquid desiccant air conditioning unit = the air supply volume of the air supply devices 2, and the air supply volume of the air supply devices 2/ the rated air volume of single air supply device 2 = the number of the air supply devices 2.

The dry coil air conditioning unit 4 of the present embodiment is similar to the conventional air conditioning unit, except that the water supply temperature and the structural form of the heat exchanger are different. The air conditioning unit is an air handling device assembled from various air handling functional sections. The air handling function sections of the unit include elements for air mixing, current sharing, filtration, cooling, primary and secondary heating, dehumidification, humidification, air supply, air return, water spray, noise reduction, heat recovery and others. Classified by structure type, the dry coil air conditioning unit 4 can be divided into horizontal, vertical and ceiling type.

In the present embodiment, it is preferred that the radiant coil 1 is disposed between the ground and the base course 13, and an insulating layer 14 is disposed above the basement layer 13. The radiant coil 1 is located on the upper surface of the insulating layer 14, and a concrete filling layer 15 is provided between the insulating layer 14 and the lower surface of the ground. The basement layer 13, the insulating layer 14, the radiant coil 1, the concrete filling layer 15, and the floor constitutes a coil-type radiant floor. In addition, there may be a layer of cement mortar screed between the concrete filling layer 15 and the floor. The radiant coil 1 is directly poured into a concrete floor (or floor slab) in the large space, and the radiant coil 1 is made of a cross-linked polyethylene duct (PE-Xa, PE-Xc) with an oxygen barrier layer or a polybutene (PB) duct which can be connected in thermally fused way, and the use condition level is 4. The radiant coil is arranged in a fold-back type, the outer diameter D of the radiant coil is 25mm, the wall thickness e is selected as: PE-X e ≥ 2.3mm; PB e ≥ 2.0mm. A floor radiant water separator and a water collector are integrally installed by using integration means of machined parts, instruments and insulation. It is not allowed to be assembled on site, and each product should be completely tested before leaving the factory. Coils of each circuit shall be a full coil and connected coils shall not be used. The radiant coil 1 is arranged in a fold-back type, and comprises at least one circulation loop, each circulation loop is connected to a main return liquid duct through a water collector, and each circulation loop is connected to the main liquid supply duct through a water separator.

In the present embodiment, the air supply devices 2 are mounted on the floor of the large space, and the exhaust device is located at the top of the large space, so that the air supply devices 2 and the exhaust device constitute a displacement-type lower air supply mode. In this embodiment, by an organic combination of the coil-type radiant floor and the displacement-type lower air supply mode, the liquid desiccant air conditioning unit 3 processes the outdoor fresh air to a suitable temperature and humidity, and the dry coil air conditioning unit 4 processes the indoor return air or the outdoor fresh air to a corresponding temperature, then the mixed air is sent to respective load concentration areas from a displacement-type air supply device by the displacement-type lower air supply mode. The coil-type radiant floor bears a basic sensible heat load, and the liquid desiccant air conditioning unit 3 bears all latent heat load and part of sensible heat load, the dry coil air conditioning unit 4 and the dry fan-coil 5 disposed on the ground inside the outer envelope structure bear the residual sensible heat load.

The dry coil air conditioning unit 4 of the present embodiment is installed in the air-conditioning plant room 300, and is installed on the floor. The unit is placed on a flat base. The base can be casted by concrete or be welded by channel steel and the base surface should be leveled during installation. The dry coil air conditioning unit 4 is connected by bolts and fitted with shock pad or shock absorbing spring. The dry coil air conditioning unit 4 has advantages of large air volume, low noise, simple structure, flexible installation position, and no wet surface.

Limited by height of people and device in the large space, the control area needs to be formed only in the range of 1.8-2.5m above the ground of the large space. The new air conditioning terminal system only needs to ensure that the temperature and humidity of the control area are within a reasonable range. The air supply devices 2 of the present embodiment are installed on the ground of the large space, and the purpose thereof is as follows. In the cooling season, the air blowing devices 2 send cold air with lower temperature than the indoor air into the room, and the supplied cold air is naturally settled to the ground due to its density being greater than the density of surrounding air. By controlling air supply amount of the air blowing devices 2, the supplied cold air is diffused to the control area, thereby ensuring that the control area can reach temperature and humidity values required by the person and the devices. In the heating season, the air supply devices 2 send hot air with higher temperature than the indoor air into the room, and the hot supplied air first passes through the human activity area, and then spreads to the control area by controlling the air supply amount of the air supply devices 2, thereby ensuring that the control area can reach temperature and humidity values required by the person and the devices.

It should be noted that reasons for a high energy consumption of the traditional air conditioning terminal system in the large space is as follows. First, an increase in the capacity of the air conditioning system device will inevitably lead to an increase in operating energy consumption and cost. Second, a wide range of air circulation methods are used for heat and humidity treatment, and the energy consumption and cost of air circulation power devices are greatly increased. Third, in an all-air air conditioning system, the heat and humidity load in the room is treated by air. Because the specific heat capacity of the air is small, the transmission energy consumption is about 4 to 5 times that of a water-based air conditioning system. Fourth, when the all-air air conditioning system is used for cooling in summer, a chilled water pump delivers about 7 °C of cold water prepared by the refrigerator to a surface air cooler of the air-conditioning unit, and completes the heat-moisture treatment of the air through the surface air cooler. In order to meet dehumidification demand, supply temperature of the cold water is usually around 7 °C. However, if only a process of eliminating residual heat is carried out, a cold source with temperature of about 15 to 18 ° C can be used. The heat could have been discharged by the high-temperature cold source will treated by the 7 °C low-temperature cold source together with dehumidification, resulting in waste of energy utilization grade and restricting the utilization of natural cold source and the improvement of refrigeration device efficiency.

The mechanisms for low operating energy consumption of the new air conditioning terminal system of the present embodiment are as follows. First, a capacity reduction of the air conditioning system device directly leads to a result of greatly reduced operating energy consumption and cost. Second, the new air conditioning terminal system in this embodiment only carries out heat and humidity treatment in the control area (Near-ground personnel activity area), so the air volume of the air conditioning system is greatly reduced, and the operating energy consumption and cost of the air circulation power device are greatly reduced. Third, a large area of coil radiant floor is used and the cold and heat energy are transferred using water as medium in the coil. Since the specific heat capacity of water is large, the energy consumption for transportation is only about 20% to 30% of an air-mediated air conditioning system. Fourth, in this embodiment, the liquid desiccant air conditioning unit 3 is used to dehumidify the fresh air, which replaces the traditional condensing and dehumidifying mode and bears the entire latent heat load in the room, and other devices only needs to handle the indoor sensible heat load (about 50% to 70% of the total load). Therefore, it is possible to directly use a free natural cold source. Even with electric refrigeration, the efficiency of the refrigerator will increase by more than 30%, and the efficiency of the refrigerator further reduces the operating energy consumption and cost of the system.

### Embodiment 2, which is an embodiment covered by the claimed invention.

In general, the evaluation of indoor environment thermal comfort requires a comprehensive consideration of the following factors: air temperature, air humidity, air flow rate, average radiant temperature, human body factors (metabolism rate and clothing wear, etc.). When a reference object is determined, the indoor environment thermal comfort is only related to the four factors of air temperature, air humidity, air flow rate, and average radiation temperature. The air movement mechanism of all-air mixed ventilation is the action of inertia force, which makes the indoor air diluted and mixed by virtue of inertia force. The indoor space of buildings is a main body, and heat and humidity treatment of indoor environment are carried out as a whole. Determined by the all-air mixing ventilation mechanism, the indoor environment thermal comfort is not ideal in the cooling season, heating season and transition season.

In addition, Indoor air quality is affected by a wide variety of pollutants, including carbon dioxide, dust particles, formaldehyde, nitrogen oxides, fungi, bacteria, viruses, dust mites, etc. The air-mixed ventilation air-conditioning system mainly controls the concentration of pollutants in the indoor air by introducing outdoor fresh air. However, in the air-conditioning unit, the fresh air is treated after mixed with the return air, and the cleanliness is greatly reduced before the fresh air enters the room. Then the air is sent out at a height of 3.5 to 7.0 meters or more from the ground, so that the pollutants in the upper part of the indoor space diffuse downward, which seriously affects the air quality of the personnel activity area, which is because of mixing caused by the air supply mode. Furthermore, the conventional all-air mixed air-conditioning system uses decondensation to dehumidify, so there are a large number of wet surfaces. These wet surfaces are excellent places for the growth and reproduction of bacteria, molds, viruses and other pollutants, which seriously affect the indoor air quality.

While solving the problem of high energy consumption of the existing air conditioning terminal system in Embodiment 1, the present embodiment also solves a problem of poor air quality in the large space. The difference from Embodiment 1 is that the new air conditioning terminal system of the present embodiment further includes a liquid desiccant air conditioning unit 3.

On the basis of Embodiment 1, the liquid desiccant air conditioning unit 3 processes the outdoor air into fresh air having a certain humidity and temperature, and the air supply devices 2 are also used to deliver the fresh air to the large space. The fresh air and cold air or hot air output from the second air conditioner are collected and sent to the large space through the air supply devices 2, so that the fresh air is diffused in the control area, to improve the air quality of the control area.

Preferably, the second air conditioning device, the liquid desiccant air conditioning unit 3, and the air supply device 2 are connected through a duct network, and the fresh air and the cold air or hot air output from the second air conditioning device are collected in the duct network, and are delivered to the air supply device 2 through the duct network. Preferably, a plurality of air supply devices 2 are provided, and the plurality of air supply devices 2 are installed at the bottom of the large space, and the second air conditioning device and the liquid desiccant air conditioning unit 3 are respectively in communication with each of the air supply devices 2.

In the cooling season, the high-temperature humid fresh air passes through a full-heat recovery unit and a dehumidification unit of the liquid desiccant air conditioning unit 3, and becomes a low-temperature dry fresh air, which is mixed with the cold air and sent out from the air supply devices. Alternatively, the high-temperature humid fresh air passes through a pre-cooling unit and a dehumidification unit of the liquid desiccant air conditioning unit 3, and becomes a low-temperature dry fresh air, which is mixed with the cold air and sent out from the air supply devices.

In this embodiment, the fresh air processed by the liquid desiccant air conditioning unit 3 bears all latent heat load and part of sensible heat load in the room. The liquid desiccant air conditioning unit 3 uses a solution having hygroscopic properties as the moisture absorbing material, and the solution is in direct contact with the air for heat and mass transfer. A set of devices can simultaneously meet the requirements of dehumidification and humidification, and the solution can effectively purify the air, and remove harmful substances such as bacteria, mold, and dust from the air. The working principle of the liquid desiccant air conditioning unit 3 to change the high-temperature humid fresh air into a low-temperature dry fresh air is: the liquid-desiccant air conditioning unit 3 uses a solution having hygroscopic properties as a moisture absorbing material, such as a lithium bromide solution or a lithium chloride solution. The pressure difference between water vapor partial pressure of the treated air and surface vapor pressure of the hygroscopic solution is driving force of moisture transfer, so under the same condition, the lower the vapor pressure on the surface of the solution, the stronger the dehumidification capacity of the solution and the lower the humidity (moisture content) that can be achieved by the treated air. After the dehumidification process, the concentration of the solution is lowered and the dehumidification ability of the solution is lowered. In order to be able to be recycled, it is also necessary to concentrate and regenerate the moisture absorption solution. The dehumidification unit and the regeneration unit are core components of the liquid desiccant air conditioning unit, and the solution is directly in contact with the air in the dehumidification/regeneration device to perform the heat and mass transfer process. In the dehumidification unit, the moisture is transferred from the air to the solution, the air is dehumidified, and the solution is diluted. Regeneration is a reverse process of the dehumidification process, the air is humidified, and the solution is concentrated and regenerated. The heat and mass transfer effect of a dehumidifier and a regenerator directly affects the performance of the entire liquid desiccant air conditioning unit.

During the heating season, low-temperature dry fresh air passes through a full-heat recovery unit and a humidifying unit of the liquid desiccant air conditioning unit 3, becomes a warm and humid fresh air, which is mixed with the hot air and sent out from the air supply devices. Alternatively, the low-temperature dry fresh air passes through a pre-cooling unit and a humidifying unit of the liquid desiccant air conditioning unit 3, and becomes a warm and humid fresh air, which is mixed with the hot air and sent out from the air supply devices.

In the present embodiment, during the heating season, the working principle of the liquid desiccant air conditioning unit 3 to change the low-temperature dry fresh air into a warm and humid fresh air is similar to the summer treatment process. In the summer, the low-temperature dry fresh air is sent into the room, and the high-temperature and humid regenerative air is discharged, while in the winter, the high-temperature and humid air is sent into the room.

In actual use, the liquid desiccant air conditioning unit 3 is disposed in the air-conditioning plant room 300. It is recommended that the height of the air-conditioning plant room 300 is no less than 3.3 meters, the temperature is 0°C ~45°C, the relative humidity is less than 85%. The liquid desiccant air conditioning unit 3 should be installed on the ground. The installation of the liquid-desiccant air conditioning unit 3 is similar to the installation of conventional air conditioning units and is placed on a flat base. The base can be casted by concrete or be welded by channel steel and the base surface should be leveled and smeared during installation. The liquid desiccant air conditioning unit 3 is connected by bolts and fitted with shock pad or shock absorbing spring.

In the present embodiment, the new air conditioning terminal system can greatly improve the indoor thermal comfort in the large space, because an organic combination of the coil-type radiant floor and the displacement-type lower air supply mode can achieve good stratification effect and a purpose of part space control, can realize effective control of the heat and humidity environment in the control area (near-ground personnel activity area), and can maximally avoid many uncomfortable factors such as uneven distribution of temperature and humidity in the control area (near-ground personnel activity area), large wind speed, strong sense of blowing, high sensible temperature in summer (caused by thermal radiation) and low sensible temperature in winter (caused by cold radiation).

The new air conditioning terminal system of the present embodiment can greatly improve the air quality in the large space because the air supply devices installed on the ground feed the treated fresh air from the bottom area of the room, and then passes through the human body and rises to the upper part of the indoor room. The mechanism by which the fresh air passes through human respiratory zone and reaches dirty area in the upper of the room and the rationality of flowing of airflow enables the personnel in the indoor working area to obtain higher quality indoor air under the same condition than the all-air mixed ventilation mode. Moreover, the liquid desiccant air conditioning unit 3 uses a solution having hygroscopic properties as the moisture absorbing material, and the solution is in direct contact with the air to effectively purify the air and remove harmful substances such as bacteria, mold, dust, etc. from the air. Since the liquid desiccant air conditioning unit 3 bears all the latent heat load in the room and other devices only bear the indoor sensible heat load, there is no wet surface in the system, further eliminating the breeding of harmful substances, and the air quality is excellent.

In the principle of the new air conditioning terminal system shown in Fig. 1, 4 indicates the dry coil air conditioning unit, 3 indicates the liquid desiccant air conditioning unit. The air treated by the dry coil air conditioning unit 4 and the liquid desiccant air conditioning unit 3 is finally collected into a main air duct through by-pass air ducts (the ducts in the middle of 4 and 3, the arrows indicate the respective airflow directions). Subsequently, two ways of air are mixed in the main air duct and finally sent into the room through a displacement-type air supply port. That is, the air outlet of the liquid desiccant air conditioning unit 3 is provided with a first branch duct, the air outlet of the second air conditioning device is provided with a second branch duct, and the air supply devices 2 are connected with a main air duct. The first branch duct and the second branch duct are respectively connected to the main air duct, so that the fresh air in the first branch duct and the air in the second branch duct are collected in the main air duct.

### Embodiment 3

The dry coil air conditioning unit 4 is a specially developed device for adapting the air-conditioning system that can independent control temperature and humidity, and has advantages of large air volume, low noise, simple structure, flexible installation position and no wet surface. This embodiment focuses on an air conditioning system with independent control of temperature and humidity. The dry coil air conditioning unit 4 is similar to the conventional air conditioning unit, except that the cold water supply temperature and the structural form of the heat exchanger are different. The air conditioning unit is an air handling unit assembled from various air handling functional sections. The air conditioning unit is an air handling device assembled from various air handling functional sections. The air handling function sections of the unit include elements for air mixing, current sharing, filtration, cooling, primary and secondary heating, dehumidification, humidification, air supply, air return, water spray, noise reduction, heat recovery and others. Classified by structure type, the dry coil air conditioning unit 4 can be divided into horizontal, vertical and ceiling type. The medium in the radiant coil 1 is "high-temperature cold water". Of course, the medium (high-temperature cold water) in the radiant coil 1 can be any cold source capable of generating high-temperature cold water (about 14 °C), such as high temperature refrigerator or natural cold source, etc. In general, the heat exchange medium of the dry coil air conditioning unit 4 comes from return water from refrigerating stations or upstream low-temperature users (primary users). The cold water supply temperature of the dry fan-coil 5 is generally around 16 ° C, and also comes from the return water of the refrigerating stations or the upstream low-temperature users (primary users).

The air to be cooled or heated required by the dry coil air conditioning unit 4 is from the indoor return air or the outdoor fresh air. It should be noted that the fresh air and the indoor return air are not mixed in the dry coil air conditioning unit 4. During the cooling season and the heating season, only the indoor return air enters the dry coil air conditioning unit 4, and the fresh air valve on the unit is closed. During the transition season, the fresh air valve is turned on and the return air valve is closed, a fresh air operation mode is adopted. The return air inlets of this embodiment is installed at a high place in the room, about 3 meters from the ground. The size and quantity of the return air inlets shall be calculated according to the rated return air volume of one dry coil air conditioning unit. According to the sensible heat load and the air supply temperature difference assumed by the responsible area of one dry coil air conditioning unit, the air supply volume of the unit can be obtained. The return air volume is equal to the air supply volume of the unit, and the size and quantity of the air return inlet are calculated according to a method of controlling wind speed. According to the indoor dehumidification and fresh air volume of the personnel, the fresh air volume of the liquid desiccant air conditioning unit can be calculated. The air supply volume of the dry coil air conditioning unit + the fresh air volume of liquid desiccant air conditioning unit = the air supply volume of the air supply devices 2, and the air supply volume of the air supply devices 2/ the rated air volume of single air supply device 2 = the number of the air supply devices 2. Since the dry fan-coil 5 bears less sensible heat load, it is better to arrange the dry fan-coils as many as possible. As long as there is a position under the glass curtain wall, it can be filled with dry fan-coils 5.

In the air conditioning system, the sensible heat load (heat extraction) accounts for about 50 to 70% of the total load, while the latent heat load (dehumidification) accounts for about 30 to 50% of the total load. Due to the thermal-wet coupling treatment, in order to meet the dehumidification demand, the temperature of the cold source is limited by the indoor air dew-point temperature, usually at 5 °C to 7 °C. However, if only the process of eliminating residual heat is performed, a cold source about 15 to 18 ° C can satisfy the demand. The part of the sensible heat load that accounts for more than half of the total load which have been discharged by the high-temperature cold source will treated by the 7 °C low-temperature cold source together with dehumidification, resulting in waste of energy utilization grade and restricting the utilization of natural cold source and the improvement of refrigeration device efficiency.

In summer, the air conditioning system undertakes task of eliminating indoor residual heat, residual moisture, carbon dioxide, odor and other harmful gases. among them:

The exclusion of residual heat can be achieved in a variety of ways. The cooling effect can be achieved as long as the temperature of the medium is lower than room temperature. It can be achieved by indirect contact (with radiation terminal, etc.) or by flow displacement with low temperature air.

The task of eliminating residual moisture, the task of eliminating carbon dioxide, indoor odor and other harmful gases cannot be achieved by indirect contact, but only by replacement (mass exchange) between low-humidity or low-concentration air and the air in the room.

The amount and change trend of fresh air needed for removing the indoor residual humidity are consistent with the task of removing carbon dioxide and odor. That is, the fresh air can simultaneously meet the requirements of eliminating residual humidity, removing carbon dioxide and odor. The task of eliminating waste heat in the room is achieved through other systems (independent temperature control mode). As there is no need to undertake the task of dehumidification, the control task of eliminating waste heat can be realized by using a cold source with a higher temperature.

In the winter, the air conditioning system undertakes a task of raising indoor air temperature, humidifying indoor air, carbon dioxide, odors and other harmful gases, among them:

Increasing indoor air temperature can be achieved in a variety of ways. The heating effect can be achieved as long as the temperature of the media is higher than the room temperature. It can be achieved by indirect contact with radiation terminal or by flow and displacement with the hot air.

The task of humidifying indoor air, the task of eliminating carbon dioxide, indoor odor and other harmful gases cannot be achieved by indirect contact, but only by replacement (mass exchange) between warm, humid air and the air in the room.

The amount and change trend of the fresh air needed for humidifying indoor air are consistent with the task of removing carbon dioxide and odor. That is, the fresh air can meet the requirements of humidifying indoor air, removing carbon dioxide and odor simultaneously. The task of increasing the indoor temperature is achieved through other systems which have an independent temperature control mode.

In the air conditioning system with independent control of temperature and humidity, two sets of independent air conditioning systems are adopted to control and adjust the indoor temperature and humidity respectively. The basic components of the air conditioning system with independent control of temperature and humidity are: temperature control system and humidity control system. The two systems independently adjust and control the temperature and humidity in the room.

The temperature control system includes a high-temperature cold source and a terminal device for waste heat elimination. It is recommended to use water or refrigerant as the delivery medium, and not use air as transport medium (to reduce energy consumption of transmission and distribution systems). As the dehumidification task is undertaken by an independent humidity control system, the cold water supply temperature of the sensible heat system is no longer 7 °C in the conventional condensation and dehumidification air conditioning system, but can be increased to 16-18 °C. This provides conditions for the use of natural cold sources. Even if a mechanical refrigeration is adopted, the performance coefficient of the refrigerator has been greatly improved. The terminal device for eliminating residual moisture can adopt various forms such as a radiation terminal, a dry fan-coil 5, and the like. Since the temperature of the supplied water is higher than the dew point temperature of the indoor air, there is no danger of condensation.

The humidity control system is responsible for removing both indoor carbon dioxide and odors to ensure the indoor air quality. This system is composed of a fresh air treatment unit with dehumidification function and an air supply terminal device. It uses fresh air as the medium of energy transmission, and realizes adjustment of humidity and carbon dioxide by changing the air supply volume. Because the amount of the fresh air is only to meet the requirements of temperature and humidity, the air volume of the air conditioning system with independent control of temperature and humidity is far smaller than that of the all-air system.

The air conditioning system with independent control of temperature and humidity can separate the processes of heat discharge and humidity discharge in the room, to avoid the loss caused by the combined treatment of heat and humidity discharge in the conventional air conditioning system. Moreover, due to using of independent control and regulation system to deal with temperature and humidity respectively, it can meet the requirement of constant change of room heat and humidity ratio, thus overcoming the problem that it is difficult to satisfy both temperature and humidity parameters in conventional air-conditioning system, and avoiding the phenomenon of too high (or too low) indoor humidity.

The embodiment also discloses a set position of the air-conditioning plant room 300. The air-conditioning plant room 300 is located under the ground where the indoor air supply terminal is located. The main air supply duct extends upward and is connected to the indoor air supply terminal nearby, so that the airflow is relatively smooth and the initial investment is small. However, it is not limited to this, and the set position of the air-conditioning plant room 300 can be flexibly selected. In actual use, the set position of the air-conditioning plant room can be selected according to the actual situation. For example, the ground provided with the radiant coil 1 is the ground of a second floor, and the air-conditioning plant room 300 is located at the first floor. Another example: the air-conditioning plant room 300 is located underground. Even if the air-conditioning plant room 300 is located under the outdoor ground, the fresh air can be taken from a fresh air shaft, which does not affect the use of the liquid desiccant air conditioning unit and the dry coil air conditioning unit.

The scope of the disclosure is limited by the attached claims and not by the above description.

In addition, it should be understood that, although this specification is described in terms of embodiments, not each embodiment contains only one independent technical solution. This description of the specification is intended only for clarity. Those skilled in the art should have the specification as a whole, and the technical solutions in the respective embodiments may also be combined as appropriate to form other embodiments that can be understood by those skilled in the art.

## Claims

1. An air conditioning terminal system for a large space, comprising:
a first air conditioning device, a second air conditioning device, and an air conditioning terminal device, the air conditioning terminal device comprises a radiant coil (1), and air supply devices (2) for conveying cold air or hot air into the large space;
wherein, the radiant coil (1) is buried inside a ground of the large space, the first air conditioning device is in communication with the radiant coil, and a fluid medium output from the first air-conditioning device is circulated in the radiant coil (1), energy of the fluid medium is first transmitted to the ground, and then radiates through the ground to the large space, thereby adjusting temperature of the large space;
the air supply devices (2) are installed at a bottom of the large space, and are in communication with the second air conditioning device;
**characterized in that**:
the air conditioning terminal device further comprises a liquid desiccant air conditioning unit (3) for treating fresh air outside the large space and delivering the fresh air into the large space, and a plurality of dry fan-coils (5);
the air supply devices (2) are further in communication with the liquid desiccant air conditioning unit (3), the air supply devices (2) output mixed air including the fresh air output from the liquid desiccant air conditioning unit (3) and cold air or hot air output from the second air conditioning device to the bottom of the large space;
the plurality of dry fan coils (5) are fixed on the ground, and disposed near a side wall of the large space; a distance between the dry fan coils (5) and the side wall of the large space is 0.5m to 10m.

2. The air conditioning terminal system for a large space according to claim 1, wherein the second air conditioning device, the liquid desiccant air conditioning unit (3), and the air supply devices (2) are connected through a duct network, and the fresh air output from the liquid desiccant air conditioning unit (3) and cold air or hot air output from the second air conditioning device are collected in the duct network, and are delivered to the air supply device (2) through the duct network.

3. The air conditioning terminal system for a large space according to claim 1 or 2, wherein the air supply devices (2) are installed at the bottom of the large space and the second air conditioning device and the liquid desiccant air conditioning unit (3) are respectively in communication with each of the air supply devices (2).

4. The air conditioning terminal system for a large space according to claim 1 or 2, wherein an air inlet of the second air conditioner is provided with a return air duct and a new air duct, the return air duct is provided with a return air valve, and the fresh air duct is provided with a fresh air valve, the return air valve and the fresh air valve are opened in an alternative way to achieve the internal return air in the large space or the fresh air outside of the large space to be transferred to the second air conditioning device in an optional way.

5. The air conditioning terminal system for a large space according to claim 4, wherein top of the return air duct is provided with a return air inlet which is 2.5-4.0 m from the ground.

6. The air conditioning terminal system for a large space according to any one of claims 1 or 2, wherein the air supply devices (2) are disposed on a floor in the large space.

7. The air conditioning terminal system for a large space according to claim 1, wherein a plurality of radiant coils (1) are provided, and the plurality of radiant coils (1) are buried in parallel, and each of the radiant coils (1) is distributed in a fold shape.

8. The air conditioning terminal system for a large space according to claim 1, wherein a first branch duct is disposed at an air outlet of the liquid desiccant air conditioning unit (3), a second branch duct is disposed at an air outlet of the second air conditioning device, and a main air duct is disposed at an air inlet of the air supply device (2), the first branch duct and the second branch duct are respectively connected with the main air duct, so that the fresh air in the first branch duct and the cold air or hot air in the second branch duct are collected in the main air duct.

9. The air conditioning terminal system for a large space according to claim 1, wherein the second air conditioning device is a dry coil air conditioning unit, and the dry coil air conditioning unit comprises a dry coil, and the dry coil is disposed in parallel with the radiant coil (1).

## Patentansprüche

1. Ein Luftkühlungs-Endsystem für einen großen Raum, umfassend: a erstes Luftkühlgerät, zweites Luftkühlgerät und Luftkühlungs-Endgerät, wo das Luftkühlungs-Endgerät ein strahlendes Rohr (1) sowie Luftversorgungsgeräte (2) für die Zuführung von kaltem oder warmem Luft in den großen Raum beinhaltet; wobei das strahlende Rohr (1) in der Grundlage des großen Raumes eingebettet ist, das erste Luftkühlgerät mit dem strahlenden Rohr kommuniziert, und ein von dem ersten Luftkühlgerät austretendes fluides Medium im strahlenden Rohr (1) zirkuliert wird, wobei die Energie des fluiden Mediums zunächst in die Grundlage übertragen wird und anschließend durch die Grundlage in den großen Raum strahlt, um die Temperatur des großen Raumes zu regulieren; die Luftversorgungsgeräte (2) sind am Boden des großen Raumes montiert und mit dem zweiten Luftkühlgerät verbunden;
mit der Besonderheit, dass:
das Luftkühlungs-Endgerät weiterhin eine Flüssigkeitstrocken-Klimaanlageinheit (3) zur Behandlung von frischer Luft außerhalb des großen Raumes und zur Zuführung von frischer Luft in den großen Raum beinhaltet, sowie mehrere Trocknungs-Wasser-spulen (5);
die Luftversorgungsgeräte (2) sind darüber hinaus mit der Flüssigkeitstrocken-Klimaanlageinheit (3) verbunden, und die Luftversorgungsgeräte (2) liefern eine gemischte Luft ab, die die von der Flüssigkeitstrocken-Klimaanlageinheit (3) austretende frische Luft und die von dem zweiten Luftkühlgerät austretende kalte oder warme Luft zum Boden des großen Raumes enthält;
die mehreren Trocknungs-Wasser-spulen (5) sind auf dem Boden befestigt und in der Nähe der Seitenwand des großen Raumes angeordnet, wobei der Abstand zwischen den Trocknungs-Wasser-spulen (5) und der Seitenwand des großen Raumes zwischen 0,5 m und 10 m liegt.

2. Das Luftkühlungs-Endsystem für einen großen Raum nach Anspruch 1, bei dem das zweite Luftkühlgerät, die Flüssigkeitstrocken-Klimaanlageinheit (3) und die Luftversorgungsgeräte (2) über ein Rohrnetz verbunden sind, wobei die von der Flüssigkeitstrocken-Klimaanlageinheit (3) austretende frische Luft und die von dem zweiten Luftkühlgerät austretende kalte oder warme Luft im Rohrnetz gesammelt werden und durch das Rohrnetz zum Luftversorgungsgerät (2) geliefert werden.

3. Das Luftkühlungs-Endsystem für einen großen Raum nach Anspruch 1 oder 2, bei dem die Luftversorgungsgeräte (2) am Boden des großen Raumes angebracht sind und das zweite Luftkühlgerät sowie die Flüssigkeitstrocken-Klimaanlageinheit (3) jeweils mit jedem der Luftversorgungsgeräte (2) in Verbindung stehen.

4. Das Luftkühlungs-Endsystem für einen großen Raum nach Anspruch 1 oder 2, bei dem ein Lufteinlass des zweiten Klimageräts mit einem Zurückluftschacht und einem Neuluftschacht ausgestattet ist, wobei der Zurückluftschacht mit einem Zurückluftventil und der Neuluftschacht mit einem Neuluftventil versehen sind, und die Zurückluftventil und das Neuluftventil alternative geöffnet werden, um die interne Zurückluft im großen Raum oder die frische Luft außerhalb des großen Raumes nach Wahl an das zweite Klimagerät zu übertragen.

5. Das Luftkühlungs-Endsystem für einen großen Raum nach Anspruch 4, bei dem oben am Zurückluftschacht ein Zurücklufteinlass angebracht ist, der sich 2,5 bis 4,0 Meter über dem Boden befindet.

6. Das Luftkühlungs-Endsystem für einen großen Raum nach Anspruch 1 oder 2, bei dem die Luftversorgungsgeräte (2) auf einem Boden im großen Raum angeordnet sind.

7. Das Luftkühlungs-Endsystem für einen großen Raum nach Anspruch 1, bei dem mehrere strahlende Rohre (1) bereitgestellt sind, und die mehreren strahlenden Rohre (1) parallel versetzt sind, wobei jedes der strahlenden Rohre (1) in Form von Falten verteilt ist.

8. Das Luftkühlungs-Endsystem für einen großen Raum nach Anspruch 1, bei dem an der Luftaustrittöffnung der Flüssigkeitstrocken-Klimaanlageinheit (3) ein erster Seitenrohr, an der Luftaustrittöffnung des zweiten Luftkühlgeräts ein zweiter Seitenrohr und an der Lufteinlassöffnung des Luftversorgungsgeräts (2) ein Hauptrohr angeordnet sind, wobei das erste Seitenrohr und das zweite Seitenrohr jeweils mit dem Hauptrohr verbunden sind, sodass die frische Luft im ersten Seitenrohr und die kalte oder warme Luft im zweiten Seitenrohr im Hauptrohr gesammelt werden.

9. Das Luftkühlungs-Endsystem für einen großen Raum nach Anspruch 1, bei dem das zweite Luftkühlgerät eine Trockenkoil-Klimaanlageinheit ist, und die Trockenkoil-Klimaanlageinheit einen Trockenkoil umfasst, das parallel zum strahlenden Rohr (1) angeordnet ist.

## Revendications

1. Un système d'extrémité de climatisation pour un grand espace, comprenant :
un premier dispositif de climatisation, un deuxième dispositif de climatisation et un dispositif d'extrémité de climatisation, le dispositif d'extrémité de climatisation comprenant un serpentin radiant (1) et des dispositifs d'alimentation d'air (2) pour transmettre de l'air froid ou chaud dans le grand espace ;
où, le serpentin radiant (1) est enfoncé dans le sol de l'espace, le premier dispositif de climatisation est en communication avec le serpentin radiant, et un fluide moyen sortant du premier dispositif de climatisation est circulé dans le serpentin radiant (1), l'énergie du fluide moyen est d'abord transmise au sol, puis radiée à travers le sol vers l'espace, permettant ainsi d'ajuster la température de l'espace ;
les dispositifs d'alimentation d'air (2) sont installés au bas de l'espace et sont en communication avec le deuxième dispositif de climatisation ;
en caractère distinctif :
le dispositif d'extrémité de climatisation comprend en outre une unité de climatisation à déshydrateur liquide (3) pour traiter l'air frais à l'extérieur de l'espace et le livrer dans l'espace, et un ensemble de nombreux serpentins à air asséchis (5) ;
les dispositifs d'alimentation d'air (2) sont également en communication avec l'unité de climatisation à déshydrateur liquide (3), les dispositifs d'alimentation d'air (2) sortent un air mélangé incluant l'air frais sortant de l'unité de climatisation à déshydrateur liquide (3) et l'air chaud ou froid sortant du deuxième dispositif de climatisation vers le bas de l'espace ;
l'ensemble de nombreux serpentins à air asséchis (5) sont fixés au sol et sont positionnés près d'un mur latéral de l'espace ; la distance entre les serpentins à air asséchis (5) et le mur latéral de l'espace est de 0,5 m à 10 m.

2. Le système d'extrémité de climatisation pour un grand espace selon la revendication 1, où le deuxième dispositif de climatisation, l'unité de climatisation à déshydrateur liquide (3) et les dispositifs d'alimentation d'air (2) sont connectés par un réseau de tuyaux, et où l'air frais sortant de l'unité de climatisation à déshydrateur liquide (3) et l'air chaud ou froid sortant du deuxième dispositif de climatisation sont rassemblés dans le réseau de tuyaux et sont livrés au dispositif d'alimentation d'air (2) par le biais du réseau de tuyaux.

3. Le système d'extrémité de climatisation pour un grand espace selon la revendication 1 ou 2, où les dispositifs d'alimentation d'air (2) sont installés au bas de l'espace et le deuxième dispositif de climatisation et l'unité de climatisation à déshydrateur liquide (3) sont respectivement en communication avec chacun des dispositifs d'alimentation d'air (2).

4. Le système d'extrémité de climatisation pour un grand espace selon la revendication 1 ou 2, où l'appareil d'entrée d'air du deuxième climatiseur est équipé d'un conduit d'air retournée et d'un conduit d'air frais, le conduit d'air retournée est équipé d'une vanne d'air retournée, et le conduit d'air frais est équipé d'une vanne d'air frais, la vanne d'air retournée et la vanne d'air frais sont ouvertes alternativement pour réaliser l'air intérieur en retour dans le grand espace ou l'air frais à l'extérieur du grand espace être transféré de manière facultative vers le deuxième dispositif de climatisation.

5. Le système d'extrémité de climatisation pour un grand espace selon la revendication 4, où le dessus du conduit d'air retournée est équipé d'une prise d'air retournée qui est à une hauteur de 2,5 à 4,0 mètres au sol.

6. Le système d'extrémité de climatisation pour un grand espace selon l'une quelconque des revendications 1 ou 2, où les dispositifs d'alimentation d'air (2) sont disposés sur le plancher de l'espace.

7. Le système d'extrémité de climatisation pour un grand espace selon la revendication 1, où un ensemble de serpentins radiants (1) est fourni, et où les serpentins radiants (1) sont enfouis en parallèle, et chacun des serpentins radiants (1) est distribué sous forme de pli.

8. Le système d'extrémité de climatisation pour un grand espace selon la revendication 1, où un premier tuyau branché est disposé à l'issue de l'unité de climatisation à déshydrateur liquide (3), un deuxième tuyau branché est disposé à l'issue du deuxième dispositif de climatisation, et un tuyau principal d'air est disposé à l'entrée d'air des dispositifs d'alimentation d'air (2), le premier tuyau branché et le deuxième tuyau branché sont respectivement connectés au tuyau principal d'air, de sorte que l'air frais dans le premier tuyau branché et l'air chaud ou froid dans le deuxième tuyau branché sont rassemblés dans le tuyau principal d'air.

9. Le système d'extrémité de climatisation pour un grand espace selon la revendication 1, où le deuxième dispositif de climatisation est une unité de climatisation à serpentin asséché, et l'unité de climatisation à serpentin asséché comprend un serpentin asséché, et le serpentin asséché est disposé en parallèle avec le serpentin radiant (1).
